# EUROPÄISCHE PATENTSCHRIFT

(11) **EP 2 881 596 B1**
(45) Veröffentlichungstag und Bekanntmachung des Hinweises auf die Patenterteilung: **28.02.2018**
(21) Anmeldenummer: 14192836.6
(22) Anmeldetag: 12.11.2014
(51) Int. Cl.: E03F 5/02, F16B 2/14

(54) **Montagekeil**
Mounting wedge
Cale de montage

(30) Priorität: 09.12.2013 AT 9452013
(43) Veröffentlichungstag der Anmeldung: 10.06.2015
(73) Patentinhaber: E. Hawle Armaturenwerke GmbH, 4840 Vöcklabruck (AT)
(72) Erfinder: Jodlbauer, Johann, 4844 Regau (AT)
(74) Vertreter: Puchberger & Partner Patentanwälte

(56) Entgegenhaltungen:
- DE-A1- 2 053 058
- GB-A- 2 109 080

## Beschreibung

Die Erfindung betrifft einen Montagekeil zur lösbaren kraftschlüssigen Verbindung einer Armaturhalterung an einer Befestigungsschiene.

Aus dem Stand der Technik sind Montagekeile zur Verbindung von Rohrleitungsarmaturen mit im Boden fixierten Befestigungsschienen bekannt. Zu diesem Zweck werden Y-förmige Armaturhalterungen verwendet, die an ihren beiden Armen an der Befestigungsschiene angebracht werden, indem zwischen die Arme und die Befestigungsschiene ein Keil eingetrieben, beispielsweise mit einem Hammer eingeschlagen wird. Der gewöhnlich verwendete Keil besteht lediglich aus einem entsprechend geformten Stück Gusseisen. Eine entsprechende Vorrichtung ist aus der WO 2006/121339 A1 bekannt.

Derartige Systeme haben jedoch zahlreiche Nachteile. So kann sich der Montagekeil im laufenden Betrieb leicht lockern und herausrutschen. Auch wird durch das Einschlagen des Keils eine möglicherweise vorgesehene Beschichtung sowohl des Keils, als auch der Armaturhalterung verletzt. Dadurch kann an den Stellen, an denen der Keil angreift, Korrosion entstehen. Schließlich gestaltet sich die spätere Demontage der Vorrichtung als schwierig bis unmöglich, da sich der Keil praktisch nur mit beträchtlicher Gewaltanwendung wieder lösen lässt.

Weitere Montagekeile zur lösbaren kraftschlüssigen Verbindung einer Armaturenhalterung an einer Befestigungsschiene sind aus den Druckschriften GB 2 109 080 A sowie DE 2 053 058 A bekannt. Diese bekannten Montagekeile weisen einen U-förmigen Keilkörper auf, dessen Schenkel durch eine Spreizvorrichtung auseinandergetrieben werden. In der Praxis ergibt sich jedoch auch bei diesen Montagekeilen das Problem, dass die Position der Schenkel und auch der Spreizvorrichtung selbst über lange Zeiträume nicht fixiert ist und somit eine Lockerung des Montagekeils eintritt.

Die technische Aufgabe der Erfindung besteht somit darin, einen Montagekeil und ein System aus Montagekeil und Armaturhalterung zu schaffen, welches die oben genannten Nachteile überwindet, einfach einsetzbar und robust ist und sowohl die sichere Befestigung, als auch die sichere Lösung der Armatur ermöglicht.

Diese Aufgabe wird erfindungsgemäß durch einen Montagekeil gelöst, der einen U-förmigen Keilkörper mit einem ersten Schenkel und einem zweiten Schenkel sowie eine zwischen den Schenkeln angeordnete Spreizvorrichtung umfasst, wobei durch Betätigung der Spreizvorrichtung die Schenkel reversibel in einem spitzen Winkel zueinander aufspreizbar sind, um die Armaturhalterung kraftschlüssig an der Befestigungsschiene zu fixieren. Die Spreizvorrichtung umfasst einen Spreizkloben mit einem Innengewinde oder einer Bohrung, der eine Gewindeschraube trägt und zwischen den Schenkeln derart geführt ist, dass er bei Betätigung der Gewindeschraube zwischen den ersten Schenkel und den zweiten Schenkel tritt und diese auseinanderdrückt. Die Gewindeschraube ist in einen, mit einem Innengewinde versehenen Gewindekloben eingeschraubt, der in einem Klobenlager gehaltert ist, wobei das Klobenlager durch Aussparungen im ersten Schenkel und/oder zweiten Schenkel gebildet ist.

Der erfindungsgemäße Montagekeil muss bei Benutzung lediglich in den Spalt zwischen Rohrarmatur und Befestigungsschiene eingeschoben zu werden. Danach wird er durch Betätigung der Gewindeschraube aufgespreizt, bis er fest sitzt und keine Bewegung der Rohrarmatur möglich ist. Ein späteres Nachziehen oder Lockern der Befestigung ist einfach möglich, ohne die Beschichtung der Armatur zu beschädigen.

Bei dem Gewindekloben kann es sich auch um einen Quermutterbolzen handeln. Bei dem Spreizkloben kann es sich beispielsweise um eine Sechskantschraube, eine Hutmutter oder eine Inbusmutter handeln.

Erfindungsgemäß kann der erste Schenkel und/oder der zweite Schenkel auf den zueinander orientierten, mit dem Spreizkloben in Kontakt stehenden Seiten eine Abschrägung aufweisen, sodass die Schenkel beim Einschrauben der Gewindeschraube auseinandergetrieben werden.

Zur Führung des Spreizklobens kann auf den zueinander orientierten Seiten des ersten Schenkels und/oder des zweiten Schenkels eine Führungsnut vorgesehen sein, die in Führungsrippen des Spreizklobens eingreift, um diesen entlang der Schenkel zu führen. Wie der Spreizkloben kann auch der Gewindekloben Führungsrippen aufweisen, die in korrespondierende Führungsnuten des ersten und/oder zweiten Schenkels eingreifen, um zu verhindern, dass der Gewindekloben im Betrieb verrutscht.

Auf der Außenseite des ersten Schenkels und/oder des zweiten Schenkels kann ein Einführanschlag in Form eines Vorsprungs gebildet sein, um das Einführen und die Halterung des Montagekeils zwischen der Armaturhalterung und der Befestigungsschiene zu erleichtern. Der Einführanschlag verhindert insbesondere die Lockerung des Montagekeils während des Betriebs.

Zur Aufnahme der Gewindeschraube auf den zueinander orientierten Seiten des ersten Schenkels und/oder des zweiten Schenkels kann eine vorzugsweise runde Ausnehmung vorgesehen sein. Diese Ausnehmung stellt auch die korrekte Führung der Gewindeschraube entlang der Schenkel sicher. Die Position des Klobenlagers zur Lagerung des Gewindeklobens kann vorzugsweise derart gewählt sein, dass ein ausreichender Abstand zur Dehnungsrundung, also der Basis, des U-förmigen Keilkörpers verbleibt, um ein ausreichend weites Eintreiben des Spreizklobens mit der Gewindeschraube zu ermöglichen, vorzugsweise bis zu einem Drittel der Gesamtlänge des Keilkörpers.

Der Keilkörper kann vorzugsweise einstückig ausgeführt sein, er kann jedoch auch aus mehreren Teilen gefertigt sein. Insbesondere kann eine Achse vorgesehen sein, die den ersten Schenkel und den zweiten Schenkel miteinander verbinden.

Der Keilkörper kann vorzugsweise zur Gänze mit einer korrosionshemmenden Beschichtung versehen sein. Die Gewindeschraube, der Spreizkloben und/oder der Gewindekloben können aus einem korrosionsbeständigen Material, vorzugsweise Nirosta, gefertigt sein.

Die Erfindung umfasst ferner ein System mit einer Armaturhalterung, die durch einen erfindungsgemäßen Montagekeil an einer Befestigungsschiene montiert ist. Weitere erfindungsgemäße Merkmale ergeben sich aus den Ansprüchen, den Ausführungsbeispielen und den Zeichnungen.

Die Erfindung wird im Folgenden an Hand von Ausführungsbeispielen beschrieben.

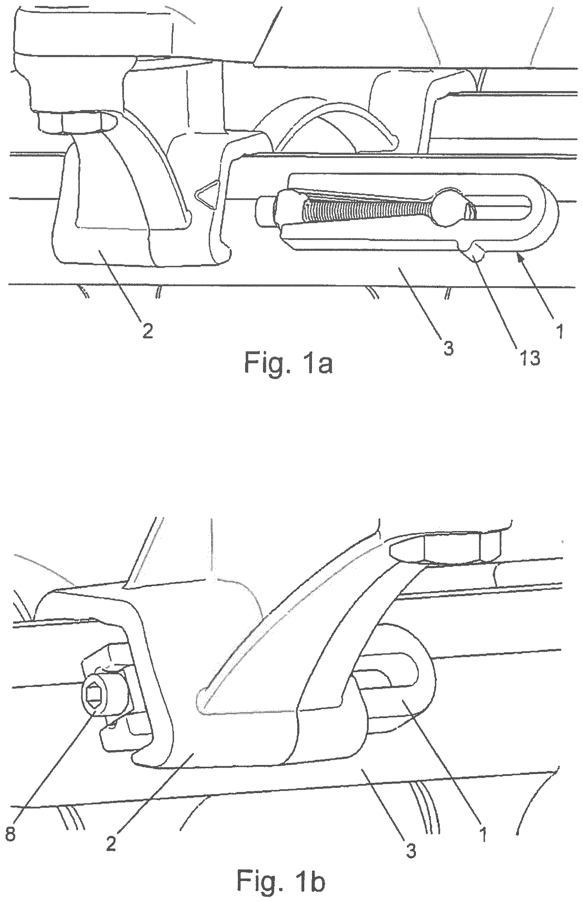

Fig. 1a zeigt eine dreidimensionale Darstellung einer Ausführungsform des erfindungsgemäßen Montagekeils 1 sowie eine Armaturhalterung 2, die mit ihren Y-förmigen Armen an einer Befestigungsschiene 3 befestigt werden soll. Zu diesem Zweck werden die Y-förmigen Halterungen über der Befestigungsschiene 3 angeordnet, und der Montagekeil 1 wird von hinten in den entstehenden Zwischenraum eingeschoben, bis er am Einführanschlag 13 anliegt.
Es ergibt sich nach dem Einschieben die Situation aus Fig. 1 b. Nun wird durch Betätigung der Innensechskant-Gewindeschraube 8 der Montagekeil 1 aufgespreizt, bis er festsitzt und die Armaturhalterung 2 mit der Befestigungsschiene 3 kraftschlüssig verbindet. Dabei verhindert der Einführanschlag 13 ein Verrutschen und unabsichtliches Entfernen des Montagekeils 1.

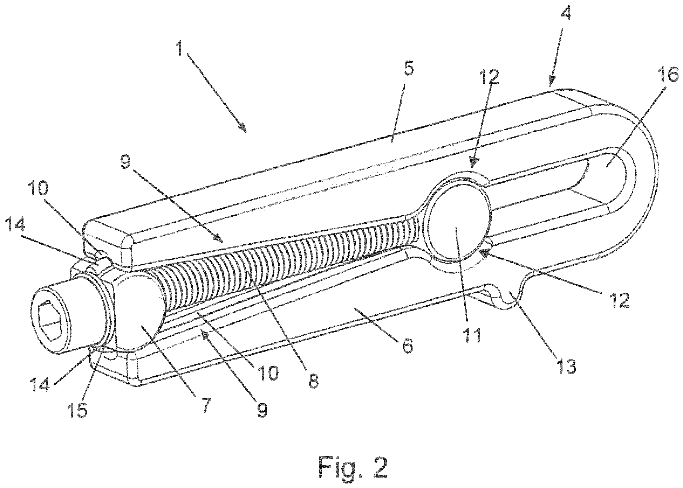

Fig. 2 zeigt eine dreidimensionale Ansicht einer Ausführungsform des erfindungsgemäßen Montagekeils 1. Dieser umfasst einen U-förmigen Keilkörper 4 mit einem ersten Schenkel 5 und einem zweiten Schenkel 6. Die beiden Schenkel sind über eine Dehnungsrundung 16 miteinander verbunden und weisen an den zueinander gerichteten Innenflächen jeweils eine Abschrägung 9 auf. Weiters ist im Bereich der Dehnungsrundung 16 ein Klobenlager 12 in Form zweier runder Ausnehmungen auf den zueinander gerichteten Innenflächen der Schenkel 5, 6 vorgesehen. Das Klobenlager 12 dient zur Lagerung eines Gewindeklobens 11, der ein Innengewinde aufweist und eine Gewindeschraube 8 trägt. Um das Einschrauben der Gewindeschraube 8 zu ermöglichen, ist zwischen dem Klobenlager 12 und der Dehnungsrundung 16 ein Abstand im Ausmaß von etwa einem Drittel der Gesamtlänge des Keilkörpers 4 vorgesehen.

Auf der Gewindeschraube 8 ist ein mit einer Bohrung versehener Spreizkloben 7 aufgesteckt oder aufgeschraubt. Bei Betätigung der Gewindeschraube 8 schraubt sich diese in den Gewindekloben 11 und drückt somit den Spreizkloben 7 derart zwischen die abgeschrägten Seitenflächen der beiden Schenkel 5,6, dass diese auseinandergespreizt werden.

Um eine Abnutzung des Spreizklobens 7 zu vermeiden, und zur Sicherung gegen unbeabsichtigtes Lösen der Gewindeschraube, ist zwischen dem Innensechskant-Kopf der Gewindeschraube 8 und dem Spreizkloben 7 eine Sicherungsscheibe 15 angebracht. Um sicherzustellen, dass sich der Spreizkloben auf einer definierten Linie bewegt, verfügt der Spreizkloben über Führungsrippen 14, die in korrespondierende Führungsnuten 10 an den Innenseiten der Schenkel 5, 6 eingreifen.

An einer Unterkante verfügt der Keilkörper 4 über einen Einführanschlag 13, um das Einführen des Montagekeils 1 zu begrenzen, und um zu verhindern, dass der Montagekeil im eingespannten Zustand verrutscht oder unabsichtlich entfernt wird.

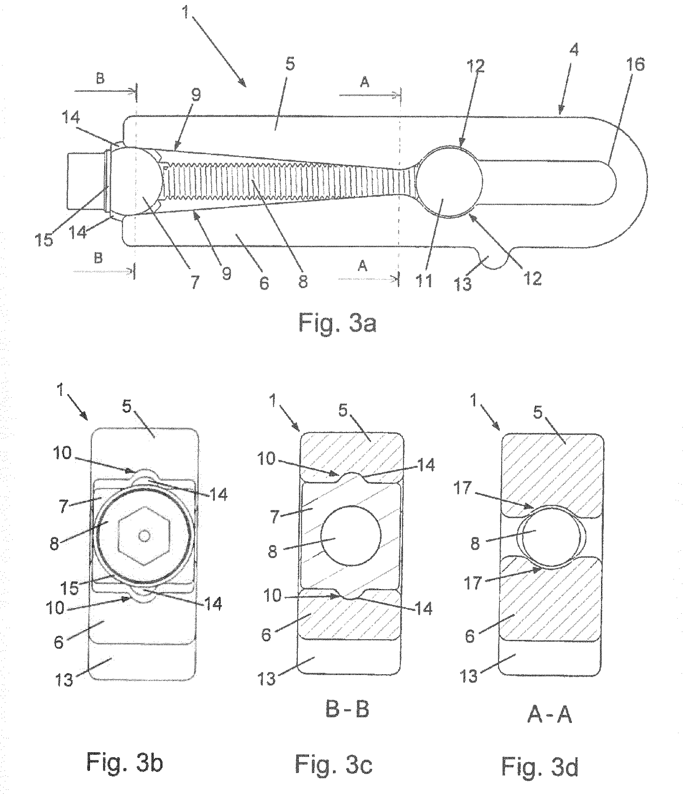

Fig. 3a zeigt eine Seitenansicht des Montagekeils 1 aus Fig. 2. Der Montagekeil 1 verfügt über einen Keilkörper 4 mit einem ersten Schenkel 5 und einen zweiten Schenkel 6, die über eine Dehnungsrundung 16 verbunden sind. In einem durch Ausbuchtungen der Schenkel 5, 6 geformten Klobenlager 12 ist ein Gewindekloben 11 gelagert. Durch ein Innengewinde des Gewindeklobens 11 ragt eine Gewindeschraube 8, die an ihrem Kopf mit einem Spreizkloben 7 in Eingriff steht. Der Spreizkloben 7 umfasst Führungsrippen 14, die in Führungsnuten (nicht dargestellt) an den Innenseiten der Schenkel 5, 6 eingreifen. Die Schenkel 5, 6 sind an ihren Innenseiten mit einer Abschrägung 9 versehen, sodass beim Einschrauben der Gewindeschraube 8 der Spreizkloben 7 die Schenkel 5, 6 zunehmend weiter auseinandertreibt.

Fig. 3b - 3d zeigen eine Seitenansicht und Schnitte A-A sowie B-B des Montagekeils 1 aus Fig. 3a. In Fig. 3b ist deutlich der Innensechskant-Kopf der Gewindeschraube 8 zu sehen. Weiters ist die Führungsnut 10 auf der Innenseite des ersten Schenkels 5 und des zweiten Schenkels 6 zu sehen, sowie die darin eingreifende Führungsrippe 14 auf dem Spreizkloben 7. Ebenfalls dargestellt ist die Sicherungsscheibe 15 und der Einführanschlag 13. In Fig. 3c ist ein Schnitt entlang der Linie B-B in Fig. 3a dargestellt. Der Spreizkloben 7 befindet sich am äußeren Ende der Schenkel 5, 6 und greift mit seinen Führungsrippen 14 in die Führungsnuten 10 ein.

Fig. 3d zeigt den Schnitt entlang der Linie A-A in Fig. 3a. Deutlich sichtbar ist, dass die Führungsnut 10 an dieser Position der Schenkel 5, 6 in eine Ausnehmung 17 übergeht, die breiter ist, um die Gewindeschraube 8 auszunehmen.

Der Spreizkloben 7 wird nicht bis zur Position A-A vorgetrieben, da der mögliche Weg der Gewindeschraube 8 durch den Abstand des Gewindeklobens 11 von der Dehnungsrundung 16 vorbestimmt ist.

Sämtliche Bauteile der vorliegenden Ausführungsform der Erfindung sind gegen Korrosion geschützt. Insbesondere ist vorgesehen, den gesamten Keilkörper 5 zur Gänze mit einer korrosionshemmenden Beschichtung zu versehen, und die Gewindeschraube 8, den Gewindekloben 11 und den Spreizkloben 7 aus einem rostfreien Material, beispielsweise Nirosta, zu fertigen.

Die Erfindung beschränkt sich nicht auf einen Montagekeil gemäß des vorliegenden Ausführungsbeispiels, sondern umfasst sämtliche Ausführung im Rahmen der nachfolgenden Patentansprüche.

### Bezugszeichenliste:

1 Montagekeil
2 Armaturhalterung
3 Befestigungsschiene
4 Keilkörper
5 Erster Schenkel
6 Zweiter Schenkel
7 Spreizkloben
8 Gewindeschraube
9 Abschrägung
10 Führungsnut
11 Gewindekloben
12 Klobenlager
13 Einführanschlag
14 Führungsrippe
15 Sicherungsscheibe
16 Dehnungsrundung
17 Ausnehmung

## Patentansprüche

1. Montagekeil (1) zur lösbaren kraftschlüssigen Verbindung einer Armaturhalterung (2) an einer Befestigungsschiene (3), wobei der Montagekeil (1) einen U-förmigen Keilkörper (4) mit einem ersten Schenkel (5) und einem zweiten Schenkel (6) sowie eine zwischen den Schenkeln angeordnete Spreizvorrichtung umfasst, wobei durch Betätigung der Spreizvorrichtung die Schenkel (5, 6) reversibel in einem spitzen Winkel zueinander aufspreizbar sind, um die Armaturhalterung (2) kraftschlüssig an der Befestigungsschiene (3) zu fixieren, und wobei die Spreizvorrichtung einen Spreizkloben (7) mit einem Innengewinde oder einer Bohrung umfasst, der eine Gewindeschraube (8) trägt und zwischen den Schenkeln (5, 6) derart geführt ist, dass er bei Betätigung der Gewindeschraube (8) zwischen den ersten Schenkel (5) und den zweiten Schenkel (6) tritt und diese auseinanderdrückt, **dadurch gekennzeichnet, dass** die Gewindeschraube (8) in einen, mit einem Innengewinde versehenen Gewindekloben (11) eingeschraubt ist, der in einem Klobenlager (12) gehaltert ist, wobei das Klobenlager (12) durch Aussparungen im ersten Schenkel (5) und/oder zweiten Schenkel (6) gebildet ist.

2. Montagekeil (1) nach Anspruch 1, **dadurch gekennzeichnet, dass** der erste Schenkel (5) und/oder der zweite Schenkel (6) auf den zueinander orientierten, mit dem Spreizkloben in Kontakt stehenden Seiten der Schenkeln (5, 6) eine Abschrägung (9) aufweisen.

3. Montagekeil (1) nach Anspruch 1 oder 2, **dadurch gekennzeichnet, dass** zur Führung des Spreizklobens (7) auf den zueinander orientierten Seiten des ersten Schenkels (5) und/oder des zweiten Schenkels (6) eine Führungsnut (10) vorgesehen ist, die in Führungsrippen (14) des Spreizklobens (7) eingreift, um diesen entlang der Schenkel (5, 6) zu führen.

4. Montagekeil (1) nach einem der Ansprüche 1 bis 3, **dadurch gekennzeichnet, dass** auf der Außenseite des ersten Schenkels (5) und/oder des zweiten Schenkels (6) ein Einführanschlag (13) in Form eines Vorsprungs gebildet ist, um das Einführen und die Halterung des Montagekeils zwischen der Armaturhalterung (2) und der Befestigungsschiene (3) zu erleichtern.

5. Montagekeil (1) nach einem der Ansprüche 1 bis 4, **dadurch gekennzeichnet, dass** zur Aufnahme der Gewindeschraube (8) auf den zueinander orientierten Seiten des ersten Schenkels (5) und/oder des zweiten Schenkels (6) eine vorzugsweise runde Ausnehmung (17) vorgesehen ist.

6. Montagekeil (1) nach einem der Ansprüche 1 bis 5, **dadurch gekennzeichnet, dass** die Position des Klobenlagers (12) zur Lagerung des Gewindeklobens (11) derart gewählt ist, dass ein ausreichender Abstand zur Dehnungsrundung (16) des U-förmigen Keilkörpers (4) verbleibt, um ein ausreichend weites Eintreiben des Spreizklobens (7) mit der Gewindeschraube (8) zu ermöglichen, nämlich ein Abstand von bis zu einem Drittel der Gesamtlänge des Keilkörpers (4).

7. Montagekeil (1) nach einem der Ansprüche 1 bis 6, **dadurch gekennzeichnet, dass** der Keilkörper (4) einstückig ausgeführt ist.

8. Montagekeil (1) nach einem der Ansprüche 1 bis 6, **dadurch gekennzeichnet, dass** der Keilkörper (4) mehrteilig ist, wobei insbesondere der erste Schenkel (5) und der zweite Schenkel (6) mit einer Achse verbunden sind.

9. Montagekeil (1) nach einem der Ansprüche 1 bis 8, **dadurch gekennzeichnet, dass** der Gewindekloben (11) Führungsrippen aufweist, die in korrespondierende Führungsnuten des ersten Schenkels (5) und/oder zweiten Schenkels (6) eingreifen, um zu verhindern, dass der Gewindekloben im Betrieb verrutscht.

10. Montagekeil (1) nach einem der Ansprüche 1 bis 9, **dadurch gekennzeichnet, dass** der Keilkörper (4) vorzugsweise zur Gänze mit einer korrosionshemmenden Beschichtung versehen ist.

11. Montagekeil (1) nach einem der Ansprüche 1 bis 10, **dadurch gekennzeichnet, dass** die Gewindeschraube (8), der Spreizkloben (7) und/oder der Gewindekloben (11) aus einem korrosionsbeständigen Material, vorzugsweise Nirosta, gefertigt sind.

12. System, umfassend eine Armaturenhalterung (2), eine Befestigungsschiene (3) und einen Montagekeil (1) nach einem der Ansprüche 1 bis 11, wobei die Armaturenhalterung (2) kraftschlüssig mit dem Montagekeil (1) an der Befestigungsschiene (3) montiert ist.

## Claims

1. A mounting wedge (1) for the detachable, frictional connection of a fitting retainer (2) to a fastening rail (3), the mounting wedge (1) comprising a U-shaped wedge body (4), which has a first limb (5) and a second limb (6), and a spreading device arranged between the limbs, the limbs (5, 6) being reversibly spreadable at an acute angle to each other by actuation of the spreading device in order to fix the fitting retainer (2) frictionally to the fastening rail (3), and the spreading device comprising a spreading block (7) which has an internal thread or bore and bears a threaded bolt (8) and is guided between the limbs (5, 6) in such a manner that it passes between the first limb (5) and the second limb (6) and pushes them apart when the threaded bolt (8) is actuated, **characterised in that** the threaded bolt (8) is screwed into a threaded block (11), which has an internal thread and is held in a block bearing (12), wherein the block bearing (12) is formed by cutouts in the first limb (5) and/or second limb (6).

2. The mounting wedge (1) according to Claim 1, **characterised in that** the first limb (5) and/or the second limb (6) have a sloping portion (9) on the sides of the limbs (5, 6) oriented towards each other and in contact with the spreading block.

3. The mounting wedge (1) according to Claim 1 or 2, **characterised in that** to guide the spreading block (7) on the sides of the first limb (5) and/or second limb (6) oriented towards each other, a guide groove (10) is provided, which engages in guide ribs (14) of the spreading block (7) in order to guide the latter along the limbs (5, 6).

4. The mounting wedge (1) according to any one of Claims 1 to 3, **characterised in that** an insertion stop (13) in the form of a protrusion is formed on the outside of the first limb (5) and/or second limb (6) to facilitate the insertion and retention of the mounting block between the fitting retainer (2) and the fastening rail (3).

5. The mounting wedge (1) according to any one of Claims 1 to 4, **characterised in that** a preferably round recess (17) is provided on the sides of the first limb (5) and/or second limb (6) oriented towards each other, to hold the threaded bolt (8).

6. The mounting wedge (1) according to any one of Claims 1 to 5, **characterised in that** the position of the block bearing (12) for supporting the threaded block (11) is selected such that a sufficient distance from the rounded expansion portion (16) of the U-shaped wedge body (4) remains to allow the spreading block (7) with the threaded bolt (8) to be driven in sufficiently far, specifically a distance of up to a third of the total length of the wedge body (4).

7. The mounting wedge (1) according to any one of Claims 1 to 6, **characterised in that** the wedge body (4) is formed in one piece.

8. The mounting wedge (1) according to any one of Claims 1 to 6, **characterised in that** the wedge body (4) has multiple parts, wherein in particular the first limb (5) and the second limb (6) are connected with a pivot shaft.

9. The mounting wedge (1) according to any one of Claims 1 to 8, **characterised in that** the threaded block (11) has guide ribs, which engage in corresponding guide grooves in the first limb (5) and/or second limb (6) to prevent the threaded block from slipping during use.

10. The mounting wedge (1) according to any one of Claims 1 to 9, **characterised in that** the wedge body (4) is provided, preferably in its entirety, with a corrosion-inhibiting coating.

11. The mounting wedge (1) according to any one of Claims 1 to 10, **characterised in that** the threaded bolt (8), the spreading block (7) and/or the threaded block (11) are fabricated from a corrosion-resistant material, preferably stainless steel.

12. A system comprising a fitting retainer (2), a fastening rail (3) and a mounting wedge (1) according to any one of Claims 1 to 11, wherein the fitting retainer (2) is mounted frictionally on the fastening rail (3) with the mounting wedge (1).

## Revendications

1. Cale de montage (1) pour la connexion par correspondance mécanique dissociable d'un support d'armature (2) à un rail de fixation (3), la cale de montage (1) présentant un corps de calage en forme de U (4) doté d'une première branche (5) et d'une seconde branche (6) ainsi qu'un dispositif d'écartement disposé entre les branches, dans lequel, par actionnement du dispositif d'écartement, les branches (5, 6) peuvent être écartées de manière réversible l'une par rapport à l'autre suivant un angle aigu afin de fixer le support d'armature (2) en correspondance mécanique au rail de fixation (3) et le dispositif d'écartement comprend un gond d'écartement (7) doté d'un filetage interne ou d'un alésage qui supporte une vis filetée (8) et est guidé entre les branches (5, 6) de manière à ce que, en cas d'actionnement de la vis filetée (8), il passe entre la première branche (5) et la seconde branche (6) et écarte celles-ci, **caractérisée en ce que** la vis filetée (8) est vissée dans un gond fileté (11) pourvu d'un filetage interne et qui est maintenu dans un palier de gond (12), le palier de gond (12) étant constitué par des évidements pratiqués dans la première branche (5) et/ou la seconde branche (6).

2. Cale de montage (1) selon la revendication 1, **caractérisée en ce que** la première branche (5) et/ou la seconde branche (6) présentent un chanfrein (9) sur les faces orientées les unes vers les autres et en contact avec le gond d'écartement des branches (5, 6).

3. Cale de montage (1) selon la revendication 1 ou 2, **caractérisée en ce que**, pour guider le gond d'écartement (7) sur les faces orientées les unes vers les autres de la première branche (5) et/ou de la seconde branche (6), il est prévu une rainure de guidage (10) qui s'engrène dans des nervures de guidage (14) du gond d'écartement (7) afin de guider celui-ci le long des branches (5, 6).

4. Cale de montage (1) selon une des revendications 1 à 3, **caractérisée en ce que**, sur la face extérieure de la première branche (5) et/ou de la seconde branche (6), il est formé une butée d'introduction (13) sous forme d'une saillie pour faciliter l'introduction et le maintien de la cale de montage entre le support d'armature (2) et le rail de fixation (3).

5. Cale de montage (1) selon une des revendications 1 à 4, **caractérisée en ce que**, pour recevoir la vis filetée (8) sur les faces orientées les unes vers les autres de la première branche (5) et/ou de la seconde branche (6), il est prévu un évidement de préférence rond (17).

6. Cale de montage (1) selon une des revendications 1 à 5, **caractérisée en ce que** la position du palier de gond (12) permettant l'appui du palier du gond fileté (11) est choisie de manière à ce qu'il reste une distance suffisante pour l'arrondi de l'extension (16) du corps de calage en forme de U (4) afin de permettre un enfoncement suffisamment large du gond d'écartement (7) avec la vis filetée (8), à savoir une distance pouvant atteindre un tiers de la longueur totale du corps de calage (4).

7. Cale de montage (1) selon une des revendications 1 à 6, **caractérisée en ce que** le corps de calage (4) est monobloc.

8. Cale de montage (1) selon une des revendications 1 à 6, **caractérisée en ce que** le corps de calage (4) est en plusieurs pièces, la première branche (5) et la seconde branche (6) étant connectées par un axe.

9. Cale de montage (1) selon une des revendications 1 à 8, **caractérisée en ce que** le gond fileté (11) présente des nervures de guidage qui s'engrènent dans les rainures de guidage correspondantes de la première branche (5) et/ou de la seconde branche (6) afin d'empêcher le patinage du gond fileté en fonctionnement.

10. Cale de montage (1) selon une des revendications 1 à 9, **caractérisée en ce que** le corps de calage (4) est de préférence pourvu en totalité d'un revêtement anticorrosion.

11. Cale de montage (1) selon une des revendications 1 à 10, **caractérisée en ce que** la vis filetée (8), le gond d'écartement (7) et/ou le gond fileté (11) sont composés de matériaux résistant à la corrosion, de préférence du Nirosta.

12. Système comprenant un support d'armature (2), un rail de fixation (3) et une cale de montage (1) selon une des revendications 1 à 11, dans lequel le support d'armature (2) est monté en correspondance mécanique avec la cale de montage (1) sur le rail de fixation (3).
